Europäisches Patentamt

European Patent Office

Office européen des brevets

(19)

(11) **EP 0 795 217 B1**

(12) **EUROPÄISCHE PATENTSCHRIFT**

(45) Veröffentlichungstag und Bekanntmachung des Hinweises auf die Patenterteilung:
**17.03.1999 Patentblatt 1999/11**

(21) Anmeldenummer: **95941033.3**

(22) Anmeldetag: **28.11.1995**

(51) Int Cl.$^6$: **H01S 3/0941**, H01S 3/06, H01S 3/081, H01S 3/109

(86) Internationale Anmeldenummer:
**PCT/EP95/04677**

(87) Internationale Veröffentlichungsnummer:
**WO 96/17418 (06.06.1996 Gazette 1996/26)**

(54) **MULTIPATH-RESONATOR MIT LONGITUDINALER PUMPANORDNUNG**

MULTIPLE PATH RESONATOR WITH LONGITUDINAL PUMP ARRANGEMENT

RESONATEUR A TRAJETS MULTIPLES AVEC ENSEMBLE DE POMPAGE LONGITUDINAL

(84) Benannte Vertragsstaaten:
**BE CH DE FR GB IT LI**

(30) Priorität: **30.11.1994 DE 4444511**

(43) Veröffentlichungstag der Anmeldung:
**17.09.1997 Patentblatt 1997/38**

(73) Patentinhaber:
- **DAIMLER-BENZ AKTIENGESELLSCHAFT**
  **70567 Stuttgart (DE)**
- **Ozygus, Bernd**
  **10717 Berlin (DE)**
- **Erhard, Jürgen**
  **10119 Berlin (DE)**

(72) Erfinder:
- **OZYGUS, Bernd**
  **D-10717 Berlin (DE)**
- **ERHARD, Jürgen**
  **D-10119 Berlin (DE)**

(56) Entgegenhaltungen:
EP-A- 0 455 383     US-A- 3 365 671
US-A- 5 237 584

- **APPLIED OPTICS, Bd. 9, Nr. 2, Februar 1970 NEW YORK US, Seiten 385-398, I. A. RAMSAY ET AL. 'A RAY ANALYSIS OF OPTICAL RESONATORS FORMED BY TWO SPHERICAL MIRRORS'**
- **IEEE JOURNAL OF QUANTUM ELECTRONICS., Nr. 11, November 1970 NEW YORK US, Seiten 753-754, A.L.PARDUE,JR.ET AL. 'REACTIVE Q SWITCHING IN A CO2 MULTIMODE-MULTIPASS LASER OSCILLATOR'**
- **QUANTUM ELECTRONICS, Bd. 25, Nr. 6, Juni 1995 NEW YORK US, Seiten 536-539, XP 000512173 P.V.KOROLENKO ET AL. 'MAIN PROPERTIES AND POTENTIAL PRACTICAL APPLICATIONS OF M-MODE LASERS'**

**Beschreibung**

Die Erfindung bezieht sich auf einen longitudinal gepumpten Festkörperlaser hoher Ausgangsleistung nach dem Oberbegriff des Anspruches 1.

Beim longitudinalen Pumpen von Festkörperlasern, insbesondere mit Laserdioden als Pumpquelle, ist die Ausgangsleistung entweder aufgrund der begrenzten zur Verfügung stehenden Ausgangsleistung einer Pumpquelle oder aufgrund von Temperatureffekten im aktiven Medium begrenzt.

Die US 5 237 584 offenbart einen Festkörperlaser, bei dem die Lasermoden innerhalb des laseraktiven Materials an mehreren Stellen mit Pumpstrahlen longitudinal gepumpt werden. Einer der Resonatorspiegel ist derart ausgelegt, daß ein Teil der Laserstrahlung in dem Resonator ausgekoppelt wird. Dabei handelt es sich um einen gefalteten Resonator, in dem eine Grundmode (TEM$_{000}$) umläuft. Die Grundmode läuft bei dieser Anordnung entlang der optischen Achse, welche durch zwei äußere Spiegel vorgegeben wird; es liegt somit ein ON-AXIS-System vor. Es entstehen mehrere Reflexionspunkte, die longitudinal gepumpt werden können. Der Weg des Lichts im Resonator ist in diesem System ausschließlich durch die Geometrie der Resonatorspiegel bestimmt, welche die optische Achse des Systems festlegen. Durch Pumpen des Lasers auf der optischen Achse wird die Grundmode angeregt. Lediglich bei einer Entfernung der Pumplichtvorrichtung von der optischen Achse schwingen höhere Gauß-Hermite- oder Gauß-Laguerre-Moden an.

Weiterhin ist aus „A Ray Analysis of Optical Resonators Formed by Two Sperical Mirrors", Applied Optics, 9 (1970)2, Seiten 385-398, bekannt, welche Randbedingungen zu erfüllen sind, um in Laserresonatoren ON-AXIS-Multipath-Moden zu erzeugen. Diese Erzeugung von ON-AXIS-Multipath-Moden wird am Beispiel eines $CO_2$-Lasers demonstriert.

Jedoch sind aus keiner dieser Schriften OFF-AXIS-Multipath-Moden bekannt.

Die Begrenzung der Ausgangsleistung läßt sich durch Benutzung von Resonatoren mit mehreren Reflexionsstellen innerhalb des aktiven Mediums umgehen. Ein Problem bekannter Anordnungen dieser Art besteht darin, daß sich die Zahl der zu justierenden Bauteile gegenüber linearen Resonatoren vergrößert, was die Handhabung erschwert und die Erstellungskosten vergrößert. Der vorliegenden Erfindung liegt daher die Aufgabe zugrunde, diese Nachteile des Standes der Technik zu beseitigen.

Diese Aufgabe wird gemäß der Erfindung mit den Merkmalen des kennzeichnenden Teils des Hauptanspruches gelöst. Einzelheiten der Erfindung ergeben sich aus den Unteransprüchen und der Beschreibung, in der anhand der Zeichnung der Stand der Technik und mehrere vorteilhafte Ausführungsformen gemäß der Erfindung erläutert sind. Es zeigen

Fig. 1    schematisch die im Resonator auftretenden Moden,

Fig. 2    schematisch ein Ausführungsbeispiel nach dem Stand der Technik,

Fig. 3    schematisch ein weiteres Ausführungsbeispiel nach dem Stand der Technik,

Fig. 4    schematisch eine Multipath-Mode der ordnung n = 6,

Fig. 5    schematisch eine Multipath-Mode der Ordnung n = 7,

Fig. 6    den Aufbau eines zusammengesetzten Resonators,

Fig. 7    die Verhältnisse in einem einstückigen Resonator bei Diskriminierung der Moden durch Kerben und

Fig. 8    die Verhältnisse in einem einstückigen Resonator bei Diskriminierung der Moden durch unterschiedlich verspiegelte Stellen.

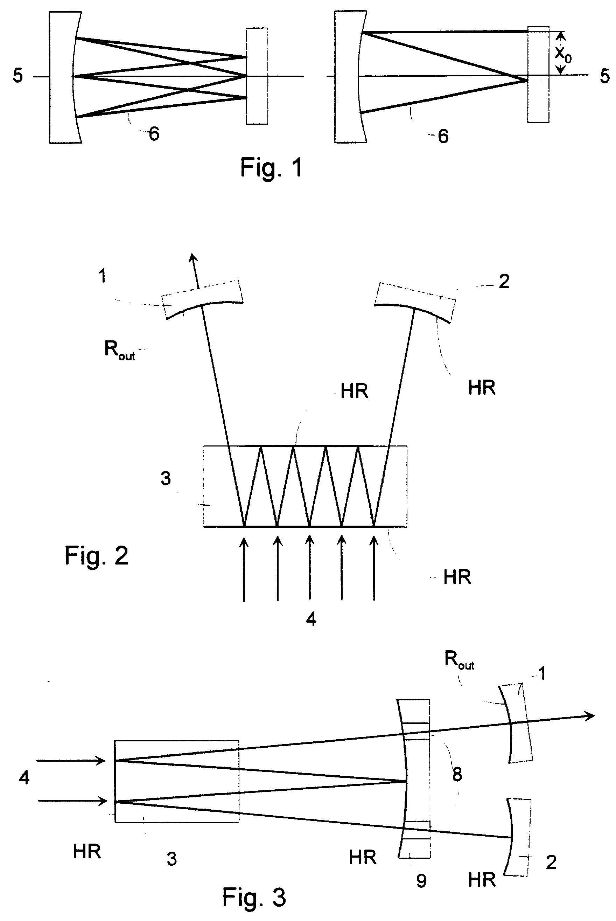

In Fig. 2 und Fig. 3 sind zwei Ausführungsbeispiele nach dem Stand der Technik gemäß der US 5 237 584 bzw. der DE 4 008 225 A1 dargestellt. Bei der in Fig. 2 gezeigten Geometrie entstehen innerhalb des aktiven Mediums 3 mehrere äquidistante Reflexionsstellen, die sich mit mehreren Pumpstrahlen 4 longitudinal pumpen lassen. Der eigentliche Laserresonator wird aus dem hochreflektierenden (HR) Spiegel 2 und dem teilreflektierenden Auskoppelspiegel 1 gebildet.

Bei dem Ausführungsbeispiel aus Fig. 3 wird der Strahl mit Hilfe eines Spiegels 9 gefaltet und durch Bohrungen 8 in dem Spiegel ausgekoppelt. Der Resonator wird wieder durch zwei weitere Spiegel, den HR-Spiegel 2 und den Auskoppelspiegel 1, gebildet.

Ein Problem dieser Anordnungen besteht, wie eingangs erwähnt, darin, daß sich die Zahl der zu justierenden Bauteile gegenüber linearen Resonatoren vergrößert, was die Handhabung erschwert und die Erstellungskosten vergrößert.

In Resonatoren, bei denen die Krümmungsradien der beiden Resonatorspiegel $\rho_1$ und $\rho_2$ in dem durch Formel 1 gegebenen Verhältnis zur Resonatorlänge $L_{Reso}$ stehen, stellen die im folgenden beschriebenen "OFF-AXIS-Multipath-Moden" neben den aus der Literatur bekannten Gauß-Hermite-Polynomen (GHP) und den Gauß-Laguerre-Polynomen (GLP) stationäre Strahlungsfelder dar.

$$\left(1-\frac{L_{Reso}}{\rho_1}\right)\left(1-\frac{L_{Reso}}{\rho_2}\right) = \cos^2\left(\pi\,\frac{m}{n}\right) \qquad m = 1,\ldots,n \qquad\qquad (1)$$

n ist dabei die Ordnung der Multipath-Mode. In Fig. 1 sind zwei verschiedene Multipath-Moden 6 der Ordnung n=3 dargestellt. Die Multipath-Moden 6 verlaufen, anders als die GHP und die GLP, nicht entlang der optischen Achse 5 des Resonators. Die in Fig. 1 rechts dargestellten Moden lassen sich für m=1 mit der Formel 2 beschreiben.

$$M_{n,x_0} = \sum_i \lambda_{n,in}(x_0)\, TEM_{in,0}(x)$$

$$(2)$$

$$\lambda_{n,in}(x_0) = \sqrt{\frac{n<n>^{in}\, e^{-<n>}}{(in)!}} \qquad\qquad <n> = \frac{x_0^2}{w_0^2}$$

Die Quadrate der Faktoren $\lambda_{n,in}(x_0)$ der Moden entsprechen dabei einer Poissonverteilung. Die Parameter dieser Moden sind die diskrete Ordnung n und der kontinuierliche Abstand $x_0$ der äußersten Intensitätskeule zur optischen Achse 5 (siehe Fig. 1). Die Funktionen $TEM_{i,j}$ entsprechen dabei den Feldverteilungen der GHP. Je größer der Verteilungsparameter <n> der Poissonverteilung ist, desto größer ist der Abstand $x_0$ des äußersten Intensitätsmaximums zur optischen Achse 5. $w_0$ ist dabei der Grundmoderadius des Resonators. Anders als die bekannten GHP oder die GLP handelt es sich bei den OFF-AXIS-Multipath-Moden nicht um eine diskrete, sondern eine kontinuierliche Modenfamilie, bei der die Frequenz der Lasermode kontinuierlich von dein Parameter der Modenfamilie abhängt.

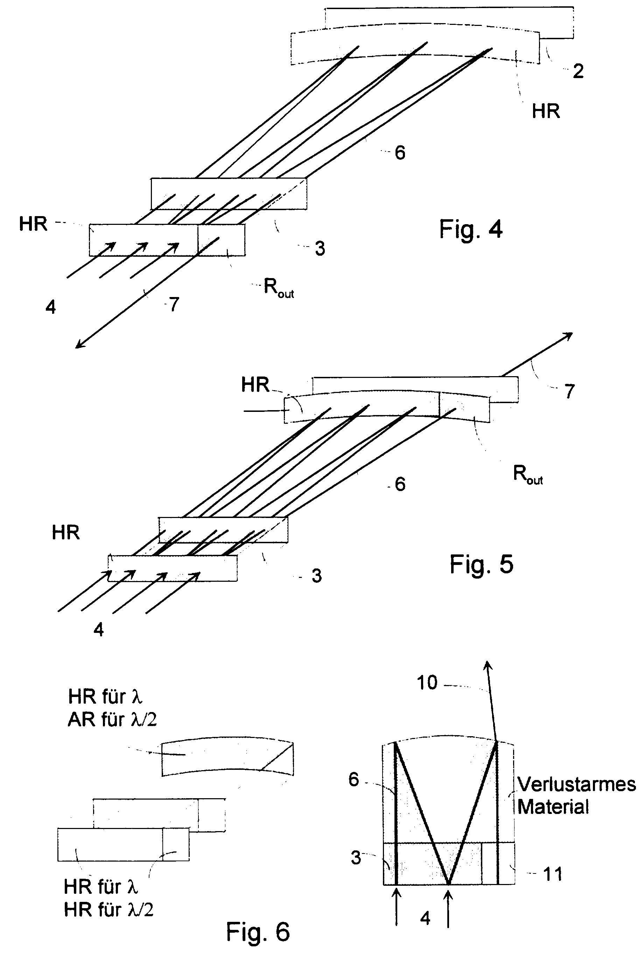

Die OFF-AXIS-Multipath-Moden lassen sich durch die Einstrahlung der Pumpstrahlen am Ort der Intensitätsmaxima gezielt anregen. Mit einer örtlich strukturierten Reflektivität des Auskoppelspiegels läßt es sich außerdem erreichen, daß nur eine Intensitätskeule der OFF-AXIS-Multipath-Mode ausgekoppelt wird. Im Ausführungsbeispiel der Fig.4 ist eine OFF-AXIS-Multipath-Mode 6 der Ordnung n=6 dargestellt. Der Auskoppelspiegel befindet sich bei diesem Beispiel direkt auf dem aktiven Medium 3. Die OFF-AXIS-Multipath-Mode 6 wird mit drei Pumpstrahlen 4 gepumpt. Nur am Orte einer Intensitätskeule der OFF-AXIS-Multipath-Mode ist die Reflektivität des Auskoppelspiegels geeignet, um signifikant Strahlung auszukoppeln, so daß nur ein Teilstrahl 7 der Mode den Resonator verläßt. In Fig. 5 ist eine OFF-AXIS-Multipath-Mode 6 der Ordnung n=7 dargestellt. Der Resonator ist, wie in Fig.4, halbmonolithisch aufgebaut. Die Auskopplung erfolgt hier über den Resonatorspiegel, der sich nicht auf dem Kristall befindet.

Bei den bisher dargestellten OFF-AXIS-Multipath-Moden handelt es sich um Spezialfälle. Im allgemeinen befinden sich die Reflexionsstellen auf einem Resonatorspiegel auf einer Ellipse. In den dargestellten Fällen ist die Ellipse zu einem Strich degeneriert.

Besonders einfach wird der Aufbau bei der Benutzung eines monolithischen Resonators. Hier entfallen alle zu justierenden Teile. In Fig.6 ist ein monolithischer Resonator dargestellt, der aus mehreren Materialien zusammengesetzt wurde. In diesem Ausführungsbeispiel findet innerhalb des Resonators in einem Kristall 11 eine Frequenzverdopplung statt. Ausgekoppelt wird nur die frequenzverdoppelte Strahlung 10.

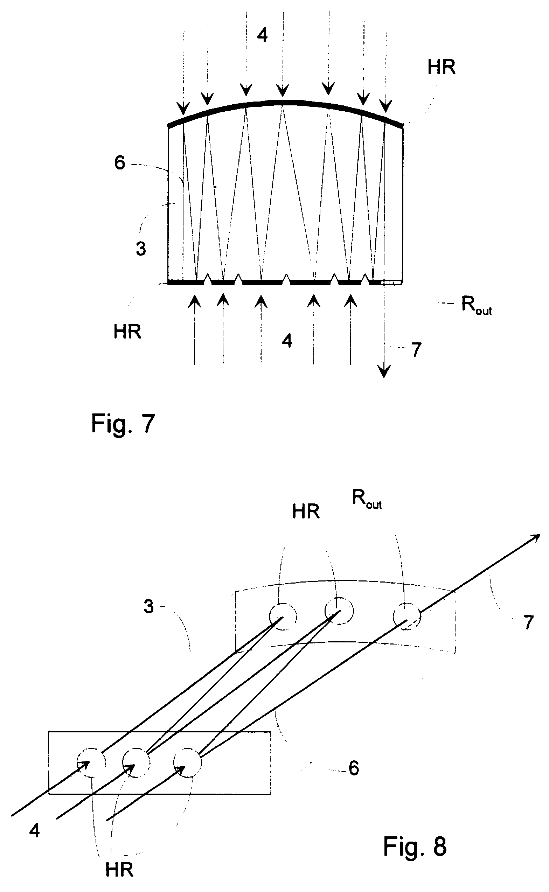

Im Ausführungsbeispiel von Fig.7 besteht der monolithische Resonator vollständig aus aktivem Material 3. Hier können die Reflexionsstellen auf beiden Stirnflächen des Laserkristalls gepumpt werden.

Um gegenüber den GHP oder den GLP des Resonators eine ausreichende Modendiskriminierung zu erreichen, müssen das Verhältnis der Verstärkung zu den Verlusten bei der anschwingenden OFF-AXIS-Multipath-Mode größer als bei den GHP oder den GLP sein. Hierzu können gezielt eingebrachte Verluste, wie zum Beispiel dünne Drähte im Resonator, benutzt werden. Bei dein Beispiel aus Fig.7 erfolgt die Diskriminierung über zwischen den Pumpstellen angebrachten Kerben im Laserkristall. Gepumpt wird die Mode in dem Beispiel mit zwölf Pumpstrahlen

EP 0 795 217 B1

4. Bei dem in Fig.8 perspektivisch dargestellten Ausführungsbeispiel wird bei einem monolithischen Resonator die Diskriminierung dadurch erreicht, daß nur die Reflexionsstellen der zu erzeugenden OFF-AXIS-Multipath-Mode entsprechend verspiegelt werden.

**Patentansprüche**

1. Festkörperlaser, bei dem die Lasermoden innerhalb des laseraktiven Mediums (3) an mehreren Stellen mit Pumpstrahlen (4) longitudinal pumpbar sind, **dadurch gekennzeichnet, daß**

   eine nicht entlang der optischen Achse (5) des Resonators verlaufende OFF-AXIS -Multipath-Mode

$$M_{n,x_0} = \sum_i \lambda_{n,in}(x_0) TEM_{in,0}(x)$$

   mit

$$\lambda_{n,in}(x_0) = \sqrt{\frac{n\langle n\rangle^{in} e^{-\langle n\rangle}}{(in)!}},$$

$$\langle n\rangle = \frac{x_0^2}{w_0^2}$$

   wobei

   $TEM_{i,j}$ Feldverteilungen der Gauß-Hermite-Polynome (GHP),
   $x_0$ Abstand der äußersten Intensitätskeule zur optischen Achse des Resonators,
   n diskrete Ordnung der Mulipath-Mode,
   $\langle n\rangle$ Verteilungsparameter der Poissonverteilung,
   $w_0$ Grundmoderadius des Resonantors

   darstellen,
   durch Einstrahlung der Pumplichtverteilung (4) am Ort der Intensitätsmaxima gezielt anregbar ist,
   durch örtlich strukturierte Verluststellen, z.B. zwischen den Pumpstellen angebrachte Kerben im laseraktiven Medium (3) oder eine Verspiegelung der Reflexionsstellen der zu erzeugenden OFF-AXIS-Multipath-Mode, die OFF-AXIS-Multipath-Mode gegenüber Gauß-Hermite-Moden oder Gauß-Laguerre-Moden diskriminierbar ist und
   eine örtliche strukturierte Reflektivität bzw. Transmission des Auskoppelspiegels (1) ein Prozentsatz einer Intensitätskeule mit der Frequenz des Laserüberganges des benutzten laseraktiven Mediums (3) auskoppelbar ist.

2. Festkörperlaser nach Anspruch 1, **dadurch gekennzeichnet, daß**
   sich der Auskoppelspiegel (1) auf dem laseraktiven Medium (3) befindet.

3. Festkörperlaser nach Anspruch 1, **dadurch gekennzeichnet, daß**
   zur Auskopplung aus dem Resonator eine Einrichtung (11) zur Frequenzvervielfachung vorgesehen ist.

4. Festkörperlaser nach Anspruch 1, **dadurch gekennzeichnet, daß**
   der Laserresonator monolithisch aufgebaut ist.

5. Festkörperlaser nach Anspruch 1, **dadurch gekennzeichnet, daß**
   sich die Reflextionspunkte auf einer Ellipse befinden.

6. Festkörperlaser nach Anspruch 5, **dadurch gekennzeichnet, daß**
   die Ellipse zu einem Strich degeneriert ist.

## Claims

1. A solid-state laser, in which the laser modes may be pumped longitudinally within the active laser medium (3) at several locations with pumping beams (4), characterised in that

   an OFF-AXIS multipath mode, which does not extend along the optical axis (5) of the resonator,

$$M_{n,x_0} = \sum_i \lambda_{n,in}(x_0) TEM_{in,0}(x)$$

   with

$$\lambda_{n,in}(x_0) = \sqrt{\frac{n\langle n\rangle^{in} e^{-\langle n\rangle}}{\langle in\rangle!}} \ ,$$

$$\langle n\rangle = \frac{x_0^2}{w_0^2}$$

   where

   $TEM_{i,j}$    represents field distributions of the Gauss-Hermite polynomials (GHP),
   $x_0$    represents the distance of the outermost intensity lobe from the optical axis of the resonator,
   $n$    represents the discrete order of the multipath mode,
   $\langle n\rangle$    represents distribution parameters of Poisson's distribution,
   $w_0$    represents the fundamental mode radius of the resonator,

   may be specifically excited by beaming in the pumping light distribution (4) at the location of the intensity maxima,

   by means of locally structured loss points, e.g. notches located between the pumping points in the active laser medium (3), or application of a reflective coating to the reflection points of the OFF-AXIS multipath mode to be generated, the OFF-AXIS multipath mode may be discriminated from Gauss-Hermite modes or Gauss-Laguerre modes, and

   [by means of] locally structured reflectivity or transmission of the coupling-out mirror (1), a percentage of an intensity lobe with the frequency of the laser transition of the used active laser medium (3) may be coupled out.

2. A solid-state laser according to claim 1, characterised in that the coupling-out mirror (1) is located on the active laser medium (3).

3. A solid-state laser according to claim 1, characterised in that, for coupling out of the resonator, a device (11) for frequency multiplication is provided.

4. A solid-state laser according to claim 1, characterised in that the laser resonator is of a monolithic construction.

5. A solid-state laser according to claim 1, characterised in that the reflection points are located on an ellipse.

6. A solid-state laser according to claim 5, characterised in that the ellipse is degenerated into a line.

## Revendications

1. Laser à solide, dans le cas duquel les modes laser peuvent être pompés longitudinalement avec des rayons de pompage (4) en plusieurs points à l'intérieur du milieu à activité laser (3) , **caractérisé en ce que**

   un mode multivoie OFF-AXIS n'évoluant pas le long de l'axe optique (5) du résonateur

$$M_{n,x_0} = \sum_i \lambda_{n,in}(x_0)\, TEM_{in,0}(x)$$

avec

$$\lambda_{n,in}(x_0) = \sqrt{\frac{n<n>^{in} e^{-<n>}}{(in)!}},$$

$$<n> = \frac{x_0^2}{w_0^2}$$

dans laquelle

TEM$_{i,j}$      représente des distributions de champ des polynômes de Gauss-Hermite (PGH),

$x_0$      la distance du lobe extérieur d'intensité par rapport à l'axe optique du résonateur,

n      l'ordre discret du mode multivoie,

<n>      le paramètre de distribution de la distribution de Poisson,

$w_0$      le rayon du mode de base du résonateur,

peut être excité de façon ciblée par l'incidence de la distribution de la lumière de pompage (4) à l'emplacement des maxima d'intensité,

le mode multivoie OFF-AXIS peut être discriminé par rapport à des modes de Gauss-Hermite ou à des modes de Gauss-Laguerre par des emplacements de pertes localement structurés, par exemple par des encoches pratiquées entre les points de pompage dans le milieu à activité laser (3), ou par une métallisation des points de réflexion des modes multivoies OFF-AXIS à générer, et

un pourcentage d'un lobe d'intensité peut être découplé avec la fréquence de la transition du laser du milieu à activité laser (3) utilisé par une réflectivité ou transmission localement structurée du miroir de découplage (1).

2. Laser à solide selon la revendication 1, **caractérisé en ce que**
le miroir de découplage (1) se trouve sur le milieu à activité laser (3).

3. Laser à solide selon la revendication 1, **caractérisé en ce que,**
il est prévu un dispositif (11) de multiplication de fréquence pour le découplage à partir du résonateur.

4. Laser à solide selon la revendication 1, **caractérisé en ce que**
le résonateur laser est agencé de façon monolithique.

5. Laser à solide selon la revendication 1, **caractérisé en ce que**
les points de réflexion sont situés sur une ellipse.

6. Laser à solide selon la revendication 5, **caractérisé en ce que**
l'ellipse est dégénérée en un trait.

Fig. 1

Fig. 2

Fig. 3

Fig. 4

Fig. 5

Fig. 6

Fig. 7

Fig. 8